# EUROPEAN PATENT SPECIFICATION

(11) **EP 3 717 698 B1**
(45) Date of publication and mention of the grant of the patent: **25.09.2024**
(21) Application number: 18884177.9
(22) Date of filing: 28.11.2018
(51) Int. Cl.: E02B 3/12, D04H 11/00

(54) **STABILIZED WATER FLOW CONTROL GROUND COVER**
BODENABDECKUNG MIT STABILISIERTEM WASSERSTROM
COUVERTURE DE SOL À RÉGULATION D'ÉCOULEMENT D'EAU STABILISÉE

(30) Priority: 28.11.2017 US 201762591428 P
(43) Date of publication of application: 07.10.2020
(73) Proprietor: Watershed Geosynthetics LLC, Alpharetta, GA 30022 (US)
(72) Inventor: COOLEY, Bradford H, Chattanooga Tennessee 37421 (US); AYERS, Michael R, Johns Creek Georgia 30022 (US)
(74) Representative: Murgitroyd & Company
(86) International application number: PCT/US2018/062895
(87) International publication number: WO 2019/108684

(56) References cited:
- EP-A2- 1 145 910
- EP-B1- 2 664 711
- US-A- 3 940 522
- US-A- 4 705 706
- US-A1- 2004 247 399
- US-A1- 2008 044 599
- US-A1- 2010 062 192
- US-A1- 2012 230 777
- US-A1- 2015 118 418
- US-A1- 2015 167 254
- US-B1- 6 835 027

## Description

### CROSS-REFERENCE TO RELATED APPLICATIONS

The present application claims benefit of U.S. Provisional Patent Application S/N 62/591,428 filed November 28, 2017.

### TECHNICAL FIELD

This invention relates generally to ground covers and methods used in covering large areas of ground for controlling environmental water infiltration into covered ground and/or wind erosion of the ground surface. More particularly, the present invention relates to ground covers that regulate flow of environmental water covering large areas of ground through the ground cover for abated infiltration through the ground cover into a ground water table below and methods for abated infiltration of environmental water for replenishing the ground water table. The invention further provides for control of dust scattering in response to wind forces on a ground surface.

In this application, the following terms will be understood to have the indicated definitions.
"tufted geosynthetics" -- a cover system which is generally comprised of synthetic grass having synthetic fibers tufted to a backing and a geomembrane and which is adapted to cover waste sites and other environmental closures. Examples of a tufted geosynthetic cover system are shown in Ayers and Urrutia U.S. Patents No. 7,682,105 and No. 9,163,375. The term "tufted geosynthetics" is also used to refer to a synthetic turf cover system.
"synthetic grass" -- refers to a composite which comprises at least one geotextile (woven or nonwoven) tufted with one or more synthetic yarns or strands and which has the appearance of grass.
"sloping ground" -- refers to ground which is not level, but has an angle of slope.
"environmental water" - refers to water occurring at a landsite, such as rainfall, snow melt, and storm water runoff.
"nonwoven textile" or "nonwoven mat" refers to fabric, sheet or web structures bonded together by entangling fiber or filaments (and by perforating films) mechanically, thermally, solvent or chemically, which structures are flat or tufted porous sheets or fabric-like materials made directly from separate staple fibers (short) and long fibers (continuous long) of polymeric materials, molten plastic or plastic film, held together by chemical, mechanical, heat, or solvent treatment.

### BACKGROUND OF THE INVENTION

Coverings have been used to overlay large areas of ground including landfills, waste sites, manufacturing laydown sites, and stockpiles. Some tufted geosynthetic ground covers are used to shed environmental water and prevent the water from infiltration through the site and being absorbed into the soil which may allow contaminates into the soil. Other sites such as in arid regions experience infrequent, but short duration rain storms. Often the rain storms are intense with significant volume of rainfall water. A common problem with such rainfall in arid regions is the rapid accumulation of large amounts of water that results in large volumes of water moving swiftly and rapidly across the ground particularly across the slopes and into gullies, stream beds, or ravines often present in such areas. The large volume flow and velocity of environmental water that may occur from sudden and heavy rainfall poses a danger to persons in low areas and areas remotely downstream from the source rainfall, and may cause damage to the ground as the fast moving water moves across the ground. Further the fast moving water fails to substantially infiltrate the ground and replenish the local ground water table, but rather a significant volume of the available environmental water often moves rapidly away through stream beds and to locations remotely downstream. Much of the available environmental water thus fails to enter the local ground water table.

Also, arid regions typically have insufficient plants, grasses, bushes, and trees, for resisting erosion by wind dispersion of soils and dust particles. Such wind-blown materials erode ground surfaces and cause dusty air conditions.

While water-shedding ground covers accordingly allow clean water to flow-off of the covered site and also provide control of wind-caused erosion, there are reasons to allow infiltration of environmental water for absorption into the underlying soil. However, the tufted geosynthetic types of ground covers are expensive to manufacture, install, and maintain.

Accordingly, it is seen that a need remains for a ground cover which may be formed to slow or abate environmental water flow across a ground for moderated flow allowing absorption of the water into the local source soil and ground water table below and control dusts, yet is easy and cost effective to manufacture, install, and maintain. It is to the provision of such that the present invention is directed. Reference is made to the documents US 2015/167254 A1 and US 2012/230777 A1 which have been cited as exemplary of the state of the art.

### SUMMARY OF THE INVENTION

The invention is set out in the appended set of claims.

The present invention meets the need in the art for a stabilized water control ground cover providing environmental water flow abatement and wind erosion control over land surfaces for local source infiltration into ground water table. In one aspect, the present invention meets the need in the art by providing for stabilized water flow control ground cover of a non-woven mat of randomly oriented polymeric fibers defining interstitial gaps and the mat having respective extended longitudinal and transverse axis and a thickness that is less than an significant minority of the transverse axis. The interstitial gaps define a plurality of interference pathways for non-direct water flow through the mat. Spaced-apart tufts are tufted with a polymeric yarn to form one or more synthetic blades in each tuft extending from the upper surface of the mat to a blade extent to simulate a field of grass. The tufts are connected by tuft bridges on an opposing side of the mat. A stabilization layer on a bottom side and proximate interior portion of the non-woven mat comprises a plurality of heat-bonded contacting engagements of portions of at least some of the fibers and the tuft bridges, whereby the mat is stiffened. The mat being disposed on a ground surface moderates a rate of flow of environmental water for increased seepage of the environmental water through the ground surface and resists rapid lateral flow thereof across the ground surface.

In yet another aspect, the present invention provides a method of abating environmental water flow off of a ground surface, comprising the steps of:
(a) forming an elongated non-woven mat of randomly oriented polymeric fibers to define a plurality interstitial gaps providing a plurality of interference pathways for non-direct water flow therethrough;
(b) tufting a plurality of spaced-apart tufts with a polymeric yarn to form one or more synthetic blades in each tuft extending from the upper surface of the mat to a blade extent to simulate a field of grass and connected by tuft bridges on an opposing side of the mat;
(c) defining a stabilization layer on a bottom side and proximate interior portion of the non-woven mat of a plurality of heat-bonded contacting engagements of portions of at least some of the randomly oriented polymeric fibers and the tuft bridges; and
   and
(d) disposing the mat over a ground surface, whereby the mat being disposed on the ground surface and upon exposure to a flow of environmental water, moderates the rate of water flow into the stabilization layer and through the mat for increased permittivity seepage of the water though the mat through the ground surface while resisting rapid lateral flow of the water across the ground surface.

The present invention provides a new and improved stabilized water flow control ground cover for use in conjunction with large areas of land.

Objects, advantages, and features of the present invention will become apparent upon a reading of the following detailed description in conjunction with the drawings and the appended claims.

### BRIEF DESCRIPTION OF THE DRAWINGS

Fig. I illustrates in a perspective view of a bottom of a stabilized water flow ground cover in accordance with the present invention.
Fig. 2 illustrates in a perspective view of the stabilized water flow ground cover illustrated in Fig. 1.
Fig. 3 illustrates in perspective view an application of the stabilized water flow ground cover shown in Fig. I to a land area subject to environmental water source occurrences for abated flow and infiltration of environmental water to replenish a ground water table.
Fig. 4 illustrates in perspective view an alternate embodiment, outside the scope of the present claim set, of a stabilized ground cover in accordance with the present invention overlaid on a ground surface for dust control.

### DETAILED DESCRIPTION

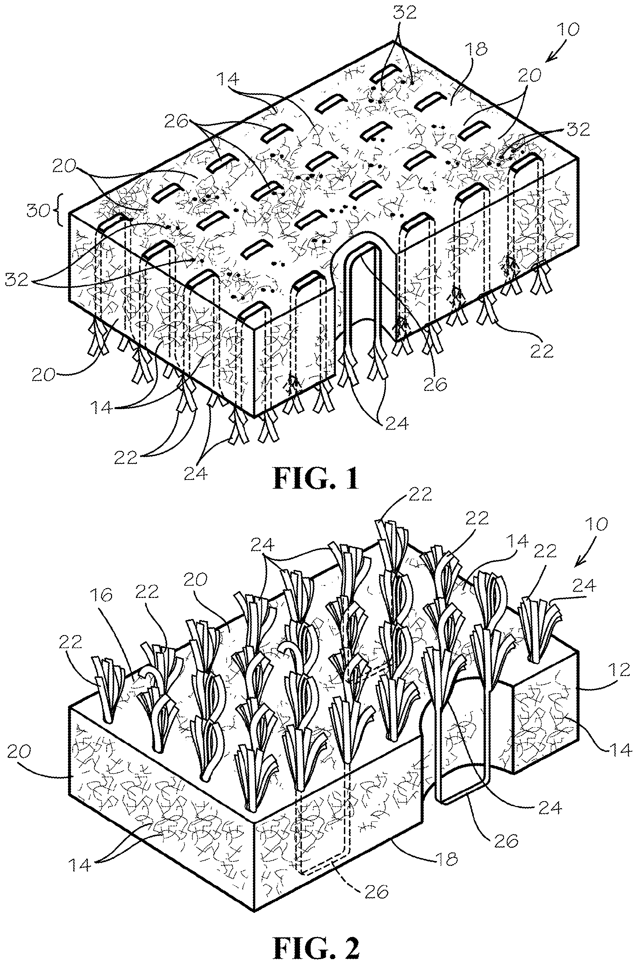

With reference next to the drawings, there is shown in Fig. 1 in perspective bottom view a ground cover 10 embodying principles of the invention in a preferred form. The ground cover 10 has a non-woven textile layer or mat 12 of randomly oriented polymeric fibers 14 (sometimes referenced herein as thermoplastic fibers), which may be made of polyethylene, polypropylene, polyolefin, or other non-woven textile fiber, spun-bond or lofted/air laid as a non-woven textile. The mat 12 has respective extended longitudinal and transverse axis and a thickness that is less than an significant minority of the transverse axis. That is, the thickness is less than the width. The mat 12 has an upper side 16 and opposing bottom side 18. The fibers 14 define a plurality of interstitial gaps or spaces 20. The spaces 20 formed by the fibers 14 define interference pathways for flow of environmental water through the mat 12. The fibers 14 interfere with direct linear flow, and rather, the environmental water flows in non-linear, not-direct channels downwardly and laterally through and the mat.

The mat 12 features permittivity that allows abated water flow therethrough for infiltration of environmental water such as from a rain storm 25 local to a source occurrence for replenishing a ground water table. The term "permittivity" refers to a cross-plane permeability of water flow perpendicular to a plane of the mat 12 divided by the thickness of the textile under a normal load. See *Designing with Geosynthetics* by Dr. Robert Koerner (2012).

Presently, it is believed that mats 12 useful with the present invention are made according to the following properties:
Fiber denier (grams per 9000 meters) in a range from about 100 denier to about 15,000 denier.

An Apparent Opening Size (AOS): ASTM D4751 for AOS in a range from US Sieve size of 3 (6730 microns) to US Sieve size of 30 (595 microns).

The resulting mat has a thickness in a range from about 0.1 inches (2.54 mm) to 4 inches (101.6 mm).

The mass per unit area of the mat 12: 101.72 grams per square metre (3 oz/ square yd (85 grams/yd²₎₎ to 2034.34 grams per square metre (60 oz/square yd (1,700 grams/yd²₎₎.

With continuing reference to Fig. 1, the ground cover 10 also includes an array or mass of synthetic blades 22 incorporated into and extending from the upper side of the mat 12 as a plurality of spaced-apart tufts 24. The ground cover 10 thereby comprises a configured embodiment of a tufted geosynthetic enabled for abated water flow through the mat 12 that contributes to infiltration of environmental water through the mat and absorption of the water in the soil for replenishment of a ground water table. The synthetic blades 22 may be formed by any conventional means such as tufting of yarns through the non-woven mat or weaving tufts or lines of tufts of synthetic fibers or yarn into the non-woven mat. The tufting involves knitting the yarns through the mat 12 with running tuft bridges 26 on the bottom side 18 as best illustrated in Fig. 2. The tufting thereby defines the adjacent tufts 24 in a field of spaced-apart tufts.

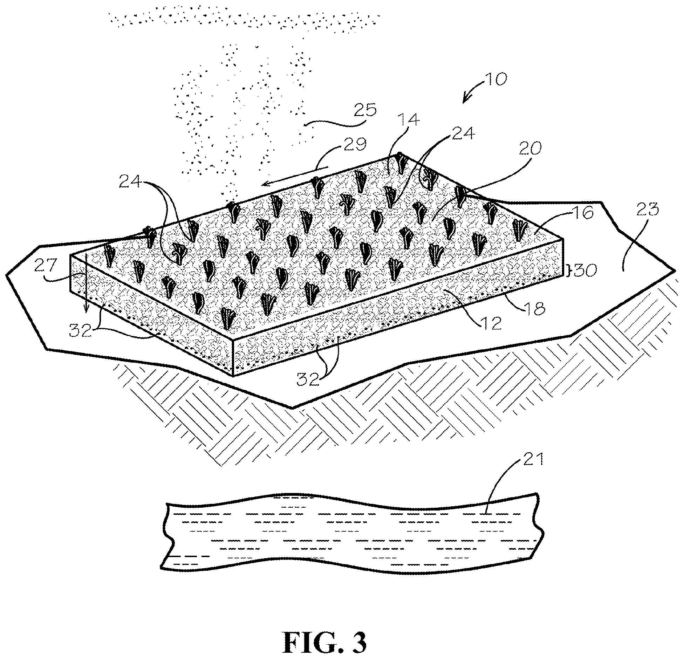

As discussed below, the spaces 20 during operational use of the ground cover 10 become occupied by environmental water and the combination of the randomly disposed fibers 14, the resulting spaces 20, and the tufts 24, cooperatively abate or moderate the flow of the environmental water through the mat 12 into a ground water table 21 below the ground surface 23 as shown in Fig. 3.

Preferably, the synthetic strands 22 are slender elongated elements. As used herein, "slender" indicates a length that is much greater than its transverse dimension(s). Examples of slender elongate elements contemplated as encompassed by the present invention or in conjunction therewith are structures that resemble blades of grass, rods, filaments, tufts, follicle-like elements, fibers, narrow cone-shaped elements, etc. The synthetic strands 22 extend upwardly from the base mat 12 as a field of such strands. Such can simulate a field of grass, pine straw or similar. The synthetic strands 22 extend upwardly a length of about 12.7 mm (1/2 inch) to about 101.6 mm (4 inches).

Preferably, the chemical composition of the synthetic grass blades 22 should be selected to be heat-resistant and UV-resistant (to withstand exposure to sunlight, which generates heat in the blades and contains ultraviolet rays), and fire-retardant. Furthermore, the polymer yarns of the blades 22 should not become brittle when subjected to low temperatures. The selected synthetic grass color and texture should be aesthetically pleasing. While various other materials may work well for the grass blades, it is presently believed that polyethylene fibers work best.

Optionally, the synthetic grass blades 22 are tufted to have a density of between about 169.53 grams per square metre (5 ounces/square yard) and about 2034.34 grams per square metre (60 ounces/square yard). Preferably, the synthetic grass blades have a density of between about 339 and 1356.23 grams per square metre (10 and 40 ounces/square yard). The tufting is fairly homogeneous. In general, a "loop" is inserted at a gauge spacing to achieve the desired density. Each loop shows as two blades of grass at each tufted location. Preferably, the synthetic grass blades 22 have a thickness of at least about 50 microns.

The bottom side 18 of the mat 12 in the illustrated embodiment includes a stabilization layer generally 30 in a side edge portion of the mat as illustrated in Fig. l. The stabilization layer 30 includes the bottom side 18 (and its open pore surface formed by the exterior portions of the fibers 14) and a proximate interior portion of the mat 12. The bottom side and proximate interior portions forming the stabilization layer 30 comprises a minor dimension of the thickness of the mat 12. In the illustrated embodiment, the stabilization layer 30 forms by contacting engagements 32 of portions of at least some of the fibers 14 and of portions of the fibers 14 and the tuft bridges 26 as tuft bind connections. The stabilization layer 30 stiffens the mat 12 with a bottom or lower portion of the mat 12 proximate the ground surface 23 providing a structural stabilization.

In the illustrated embodiment, the fibers 14 and fibers 14 and tuft bridges 26 heat bond together, or tuft bind, to establish the stabilization layer 30. The structure of the stabilization layer 30 forms by heat-bonding respective overlapping fibers 14 in the mat 12 at points of contact 32, and by heat-bonding of the fibers 14 that are in contact (32) with the tuft bridges 26 that extend across portions of the bottom side of the mat 12. This is accomplished with a heat bond/calendar process in which the open lofted fabric of the air-laid fibers are heated and calendared to reduce or take downwardly the lofting of the mat. For example, a heated roller heats the fibers 14 of the bottom side 18 and proximate portion of the mat 12 and the tuft bridges 26 and calendars the heated fibers and tufted bridges while leaving the interstitial spaces 20 porously open for environmental water flow. The bottom side and proximate portion of the mat 12 thereby form the joined integral stabilizing structure 30 of the bottom ground-contacting portion of the mat 12. Other bonding such as adhesive, spray-upon polypropylene, polyethylene or polymerizing vinyl chloride (PVC), or the like, may contactingly engage the respective fibers and tuft bridges, while leaving generally open the pores defined by the fibers for permeability of the mat. The stabilization portion 30 retains a base of the tufts 24 secured to the bottom side 18 and resists pull-out of the tufts and separation of the tufts from the mat 12 during long-term usage of the ground cover in exposure to wind, environmental water, and other weather related events, for ground cover longevity.

In reference to Figs. 1 and 3, the ground cover 10 is positioned for use over or upon a tract of land wherein it is desired to have environmental water 25 such as rainfall, snow melt, or storm water runoff seep or infiltrate into the soil. As the water falls upon the ground cover 10, the water seeps, percolates or travels generally 27, 29 through the mat 12. The spaced fibers 14 and interstitial gaps or spaces 20 cooperatively abate or moderate the flow of the environmental water through the mat 12. While the environmental water flows generally downwardly 27 through the air-laid mat 12, the tufts 24 of the grass blades 22 abate the rapid lateral flow to a slower flow 29 across the ground cover 10. The tuft bind of the fibers 14 and the tuft bridges 26 creates drag on the waterflow while the tufts remain secured in the stabilization portion 30. The non-woven mat 12 thereby slows down the movement and the flow rate or rate of travel of the water through the mat (downwardly and laterally). This slows the flow of environmental water across, through and over the ground cover 10.

As a result, the environmental water has an increased dwell time relative to the ground cover 10. The invention thereby increases the capability of the environmental water on the ground cover to pass from the non-woven mat 12 outwardly of the stabilization portion 30 and into the underlying soil for replenishment of the ground water table 21. The ground cover 10 thereby provides hydraulic energy dissipation for the overland flow of the water that does not infiltrate the ground. The energy dissipation results from the slowing of the environmental water which promotes infiltration and seepage. Slowing of the water flow further reduces the erosive forces (energy) below the ground cover and thereby reduces the potential for erosion rill or washout that, with water flow carrying away sediment, creates a recess below the ground cover. A recess formed below the ground cover results in a trampoline in that portion of the ground cover and the covered ground, and may lead to potential unstable ground particularly on slopes. The present invention thereby provides erosion dissipation across a large project site. Additionally, the nonwoven mat 12 works very well in disturbing wind flow over the ground cover 10 and reducing the uplift forces upon the base layer 14.

The sizing of the pores or interstices 16 should be selected to allow the flow of water through the mat 12 and the stabilizing portion 30 by being large enough so as not to prevent the flow through the mat as a result of the water tension within the pores.

The synthetic grass ground cover 10 accordingly aids in abated slowing of the flow of water from environmental water such as rainfall while providing a pleasant appearance to the ground cover and providing a surface that creates turbulent air flow across the upper side which air flow applies a bearingly normal force against the mat 12 for resisting wind uplift.

In another aspect, the present invention provides a method for abated flow of environmental water flow over a ground surface for infiltration into the ground water table local to an environmental water occurrence particularly applicable for arid regions. The method provides the cover 10 comprising the mat 12 of air-laid fibers 14 tufted with yarn as the field of tufts 24 having the grass-like blades 22 with a stabilized portion 32 of the mat of joined fibers 14 and tuft bridges 26 in the bottom side of the mat 12, disposing the cover 10 over a large area of ground, for exposing to environmental water occurrences, in which the mat 12 abates the flow of environmental water to facilitate flow passage outwardly of the bottom side for infiltration into the local ground water table.

Further, the ground cover 10 in accordance with the invention suitably provides dust control or abatement features in addition to water flow control. The mat 12 formed of the air-laid fibers 12 define openings and passages generally 20 through the mat, with a thickness of about 1/4 inch to about 3 inches. The mat 12 thereby provides constricted non-linear pores 20 or passageways as defined by the randomly laid fibers 14 relative to a perpendicular plane between the top side 16 and the bottom side 18. The fibers and the constricted non-linear pores 20 restrict passage of dust from the ground surface 23 in response to wind flow across the cover 10. It is contemplated that the textured upper side 16 creates a turbulent air flow proximate the cover 10 which air flow partially passes in the openings or passageways 20 in the mat 12, and thereby the fibers 14, the openings 20 through the mat 12, and the tufts 24, cooperatively resist outflow of dust from the ground surface through the mat 12. Further, as discussed above, the passages and pores defining the permittivity of the mat 12 abates environmental water flowing through the mat.

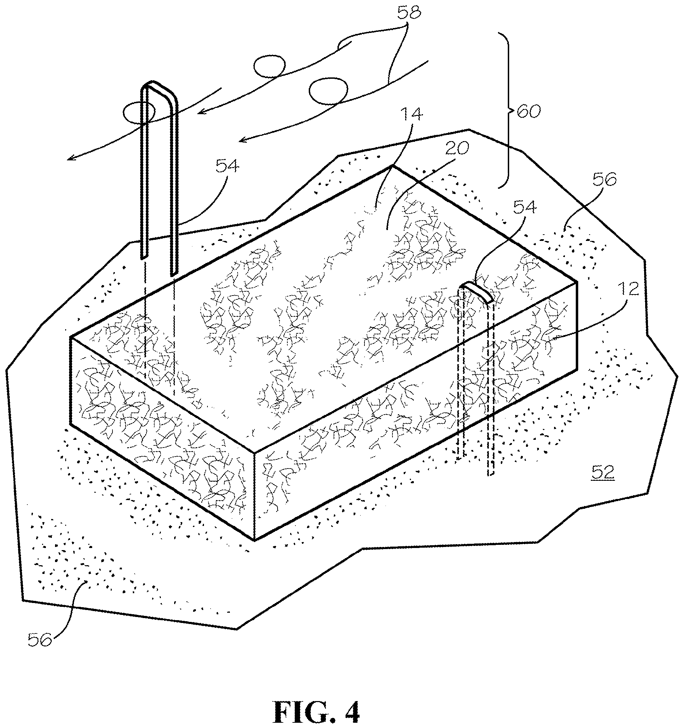

Fig. 4 illustrates in perspective view an alternate embodiment ground cover 50 overlaid on a ground surface 52 for dust control yet also providing water flow control, and resisting uplift from wind because of the weight of the mat 12 itself, or alternatively also optionally secured with staples 54 or similar ground securing fasteners. The ground cover 50 forms of the air-laid fibers 14. This alternate embodiment is particularly preferred for temporary application in a method of controlling uplift of surface materials as wind-carried dust within the air above a ground surface, deploying the mat 12 as a dust control ground cover overlying a ground surface 52 having exposed dust 56 but provided without the tufted yarns for tufts 24 of simulated grass and without the stabilized structure 30. The term "temporary application" refers to a period of time less than that specified conventionally for tufted geosynthetic cover systems for site closure purposes pursuant to regulatory guidelines and rules concerning closures for landfills, waste sites, and environmental sites requiring a geomembrane that restricts water infiltration and secured from wind uplift. The term "temporary application" in an illustrative embodiment refers to a period of up to and about 10 years, although the method of dust control matting may involve a longer period.

The ground cover 50 thereby provides an inexpensive, light-weight porous water flow control mat for covering large areas of wind-subject ground 52 while resisting uplift of dust 56 from the ground surface. Upon exposure to wind, the non-linear top side 16 creates a turbulent air flow generally 58 proximate 60 the cover 50 which air flow partially passes in the openings or passageways 20 in the mat 12, and thereby the fibers 14 and the openings 20 through the mat 12, cooperatively resist outflow of dust from the ground surface through the mat 12. The present invention accordingly provides a method for dust control of ground surfaces by seating the ground cover 50 as a blanket of the mat 12 in contact with the ground surface 52, and alternatively securing the blanket with anchors, U-shaped staples 54, pins, or other such mechanical connectors, to the ground, and alternatively, with the mass of the mat 12 and/or the turbulent proximate air flow, cooperatively resisting wind upload forces, and restricting flow of dust from the ground into the air by wind across the covered area. The blanket may comprise multiple side-by-side partially overlapping and edge joined lengths of the mat 12 (for example, mats 12 having a length of 12 feet supplied in rolls for unrolling installation on the ground surface and adjacent overlapped edges heat-bonded together to form the area wide blanket). The staples 54 provide lateral stabilization of the mat 12. The staples 54 may also optionally be gainfully employed with the ground cover 10 illustrated in Fig. 3.

The foregoing discloses embodiments of a ground cover that aids in slowing or abating the flow of environmental water over and through the ground cover while encouraging the seepage and infiltration of the water into the ground, suitable for arid regions, for replenishing ground water tables, and further, providing for a dust control for reducing airborne dust arising from wind passing over the ground as blocked or restricted by the ground cover in accordance with illustrative embodiments of the present invention. The foregoing discloses the construction of such ground cover apparatus and deployment of ground cover apparatus for water retention and infiltration with reduced airborne dust. The ground covers of the present invention are selectively constructed and arranged to meet specified performance characteristics for stabilization service life longevity and resistance to ultraviolet degradation. While this invention has been described with particular reference to certain embodiments, one of ordinary skill may appreciate that variations and modifications can be made without departing from the scope of the invention as recited in the appended claims.

## Claims

1. A stabilized water flow control ground cover (10), comprising:
a non-woven mat (10) of randomly oriented polymeric fibers (14) defining interstitial gaps (20), the mat having respective extended longitudinal and transverse axis and a thickness that is less than a significant minority of the transverse axis,
the interstitial gaps (20) defining a plurality of interference pathways for non-direct water flow therethrough;
a plurality of spaced-apart tufts (24) tufted with a polymeric yarn to form one or more synthetic blades (22) in each tuft extending from the upper surface (16) of the mat (10) to a blade extent to simulate a field of grass and connected by tuft bridges (26) on an opposing side of the mat; and
a stabilization layer (30) on a bottom side and proximate interior portion of the non-woven mat (10), said stabilization layer comprises a plurality of heat-bonded contacting engagements (32) of portions of at least some of the fibers (14) and the tuft bridges (26), whereby the mat is stiffened,
whereby the mat being disposed on a ground surface moderates a rate of flow of environmental water into the stabilization layer (30) and through the mat (10) for increased permittivity seepage of the environmental water through the ground surface and resists rapid lateral flow thereof across the ground surface.

2. The stabilized water flow control ground cover as recited in claim 1, wherein the denier of the fibers (14) is in a range of about 100 denier to about 15,000 denier and the mat (10) provides an apparent opening size in a range from U.S. sieve size 3 to U.S. sieve size 30 (ASTM D4751).

3. The stabilized water flow control ground cover as recited in claim 1, wherein the mat (10) has a thickness in a range of about 2.54 mm (0.1 inch) to about 101.6 mm (4.0 inches) and wherein the mat (10) has a mass per unit area of about 101.72 grams per square metre (3 ounces per square yard) to 2034.34 grams per square metre (60 ounces per square yard).

4. The stabilized water flow control ground cover as recited in claim 1, wherein the tufts (24) are tufted for a density of about 169.53 grams per square metre (5 ounces per square yard) to about 2034.34 grams per square metre (60 ounces per square yard) and said tufts (24) have a length of about 12.7 mm (0.5 inches) to about 101.6 mm (4 inches).

5. The stabilized water flow control ground cover as recited in claim 1, wherein the contacting engagements (32) comprise adjacent contacting fibers heat-bonded together.

6. The stabilized water flow control ground cover as recited in claim 1, wherein the contacting engagements (32) of the respective fiber (14) and the respective one of the bridges (26) are heat bonded by calendaring of the mat (10) between heated calendar rollers.

7. The stabilized water flow control ground cover as recited in claim 1, further comprising a plurality of staples (54) for spaced-apart insertion through the mat disposed over a ground surface.

8. A method of abating water flow off of a ground surface, comprising the steps of:
(a) forming an elongated non-woven mat (10) of randomly oriented polymeric fibers (14) to define a plurality of interstitial gaps (20) providing a plurality of interference pathways for non-direct water flow therethrough;
(b) tufting a plurality of spaced-apart tufts (24) with a polymeric yarn to form one or more synthetic blades (22) in each tuft extending from the upper surface (16) of the mat (10) to a blade extent to simulate a field of grass and connected by tuft bridges (26) on an opposing side of the mat;
(c) defining a stabilization layer (30) on a bottom side (18) and proximate interior portion of the non-woven mat (10) of a plurality of heat-bonded contacting engagements (32) of portions of at least some of the randomly oriented polymeric fibers (14) and the tuft bridges (26); and
(d) disposing the mat (10) over a ground surface (23),
whereby the mat (10), being disposed on the ground surface (23) and upon exposure to a flow of environmental water (25), moderates the rate of water flow into the stabilization layer (30) and through the mat (10) for increased permittivity seepage of the water though the mat through the ground surface while resisting rapid lateral flow of the water across the ground surface.

9. The method as recited in claim 8, wherein the step of forming the mat (10) uses a fiber (14) having a denier in a range of about 100 denier to about 15,000 denier and the mat (10) having an apparent opening size in a range from U.S. sieve size 3 to U.S. sieve size 30 (ASTM D4751).

10. The method as recited in claim 8, wherein the mat (10) forms to have a thickness in a range of about 2.54 mm (0.1 inch) to about 101.6 mm (4.0 inches) with a mass per unit area of about 101.72 grams per square metre (3 ounces per square yard) to 2034.34 grams per square metre (60 ounces per square yard).

11. The method as recited in claim 8, wherein tufting step tufts the yarn to have a tufts density of about 169.53 grams per square metre (5 ounces per square yard) to about 2034.34 grams per square metre (60 ounces per square yard) and said tufts having a length of about 12.7 mm (0.5 inches) to about 101.6 mm (4 inches).

12. The method as recited in claim 8, wherein forming the stabilization layer (30) comprises heat bonding adjacent fibers (14) as the contacting engagements (32).

## Patentansprüche

1. Eine stabilisierte Bodenabdeckung (10) zur Wasserflusssteuerung, die Folgendes beinhaltet:
eine Vliesmatte (10) aus willkürlich ausgerichteten polymeren Fasern (14), die Zwischenlücken (20) definieren, wobei die Matte eine entsprechende verlängerte Längs- und Querachse und eine Dicke, die kleiner als ein signifikanter kleinerer Teil der Querachse ist, aufweist,
wobei die Zwischenlücken (20) eine Vielzahl von Störungswegen für einen nicht direkten Wasserstrom dort hindurch definieren;
eine Vielzahl von beabstandeten Noppen (24), die mit einem polymeren Garn getuftet sind, sodass sie einen oder mehrere synthetische Halme (22) in jeder Noppe bilden, die sich von der oberen Oberfläche (16) der Matte (10) zu einer Halmersreckung erstrecken, um ein Feld von Gras zu simulieren, und durch Noppenbrücken (26) auf einer entgegengesetzten Seite der Matte verbunden sind; und
eine Stabilisierungsschicht (30) auf einer unteren Seite und einem nahen inneren Abschnitt der Vliesmatte (10), wobei die Stabilisierungsschicht eine Vielzahl von heißgeklebten kontaktierenden Eingriffen (32) von Abschnitten von mindestens einigen der Fasern (14) und der Noppenbrücken (26) beinhaltet, wodurch die Matte versteift ist,
wodurch die Matte, die auf einer Bodenoberfläche angeordnet ist, eine Rate des Flusses von Umgebungswasser in die Stabilisierungsschicht (30) und durch die Matte (10) für ein Durchsickern des Umgebungswassers mit erhöhter Permittivität durch die Bodenoberfläche abschwächt und dem rapiden lateralen Strom davon über die Bodenoberfläche widersteht.

2. Stabilisierte Bodenabdeckung zur Wasserstromsteuerung gemäß Anspruch 1, wobei das Denier der Fasern (14) in einem Bereich von etwa 100 Denier bis etwa 15 000 Denier liegt und die Matte (10) eine scheinbare Öffnungsgröße in einem Bereich von US-Siebgröße 3 bis US-Siebgröße 30 (ASTM D4751) bereitstellt.

3. Stabilisierte Bodenabdeckung zur Wasserstromsteuerung gemäß Anspruch 1, wobei die Matte (10) eine Dicke in einem Bereich von etwa 2,54 mm (0,1 Zoll) bis etwa 101,6 mm (4,0 Zoll) aufweist und wobei die Matte (10) eine Masse pro Flächeneinheit von etwa 101,72 Gramm pro Quadratmeter (3 Unzen pro Quadratyard) bis 2034,34 Gramm pro Quadratmeter (60 Unzen pro Quadratyard) aufweist.

4. Stabilisierte Bodenabdeckung zur Wasserstromsteuerung gemäß Anspruch 1, wobei die Noppen (24) für eine Dichte von etwa 169,53 Gramm pro Quadratmeter (5 Unzen pro Quadratyard) bis etwa 2034,34 Gramm pro Quadratmeter (60 Unzen pro Quadratyard) getuftet sind und die Noppen (24) eine Länge von etwa 12,7 mm (0,5 Zoll) bis etwa 101,6 mm (4 Zoll) aufweisen.

5. Stabilisierte Bodenabdeckung zur Wasserstromsteuerung gemäß Anspruch 1, wobei die kontaktierenden Eingriffe (32) benachbarte sich kontaktierende Fasern beinhalten, die aneinander heißgeklebt sind.

6. Stabilisierte Bodenabdeckung zur Wasserstromsteuerung gemäß Anspruch 1, wobei die kontaktierenden Eingriffe (32) der entsprechenden Faser (14) und der entsprechenden der Brücken (26) durch Kalandern der Matte (10) zwischen erhitzten Kalanderwalzen heißgeklebt werden.

7. Stabilisierte Bodenabdeckung zur Wasserstromsteuerung gemäß Anspruch 1, die ferner eine Vielzahl von Krampen (54) zur beabstandeten Einfügung durch die Matte, die über einer Bodenoberfläche angeordnet ist, beinhaltet.

8. Ein Verfahren zum Verringern von Wasserabfluss von einer Bodenoberfläche, das die folgenden Schritte beinhaltet:
(a) Bilden einer länglichen Vliesmatte (10) von willkürlich ausgerichteten polymeren Fasern (14), um eine Vielzahl von Zwischenlücken (20) zu definieren, die eine Vielzahl von Störungswegen für einen nicht direkten Wasserstrom dort hindurch definieren;
(b) Tuften einer Vielzahl von beabstandeten Noppen (24) mit einem polymeren Garn, sodass sie ein oder mehrere synthetische Halme (22) in jeder Noppe bilden, die sich von der oberen Oberfläche (16) der Matte (10) zu einer Halmerstreckung erstrecken, um ein Feld von Gras zu simulieren, und durch Noppenbrücken (26) auf einer entgegengesetzten Seite der Matte verbunden sind;
(c) Definieren einer Stabilisierungsschicht (30) auf einer unteren Seite (18) und einem nahen inneren Abschnitt der Vliesmatte (10) aus einer Vielzahl von heißgeklebten kontaktierenden Eingriffen (32) von Abschnitten von mindestens einigen der willkürlich ausgerichteten polymeren Fasern (14) und der Noppenbrücken (26); und
(d) Anordnen der Matte (10) über einer Bodenoberfläche (23),
wodurch die Matte (10), die auf der Bodenoberfläche (23) angeordnet ist und wenn sie einem Strom von Umgebungswasser (25) ausgesetzt ist, die Rate von Wasserstrom in die Stabilisierungsschicht (30) und durch die Matte (10) für ein Durchsickern des Wassers mit erhöhter Permittivität durch die Matte durch die Bodenoberfläche abschwächt, während sie rapidem lateralen Strom des Wassers über die Bodenoberfläche widersteht.

9. Verfahren gemäß Anspruch 8, wobei der Schritt des Bildens der Matte (10) eine Faser (14) mit einem Denier in einem Bereich von etwa 100 Denier bis etwa 15 000 Denier verwendet und die Matte (10) eine sichtbare Öffnungsgröße in einem Bereich von US-Siebgröße 3 bis US-Siebgröße 30 (ASTM D4751) aufweist.

10. Verfahren gemäß Anspruch 8, wobei die Matte (10) bildet, sodass sie eine Dicke in einem Bereich von etwa 2,54 mm (0,1 Zoll) bis etwa 101,6 mm (4,0 Zoll) aufweist, mit einer Masse pro Flächeneinheit von etwa 101,72 Gramm pro Quadratmeter (3 Zoll pro Quadratyard) bis 2034,34 Gramm pro Quadratmeter (60 Zoll pro Quadratyard).

11. Verfahren gemäß Anspruch 8, wobei der Tuftungsschritt das Garn tuftet, sodass es eine Noppendichte von etwa 169,53 Gramm pro Quadratmeter (5 Unzen pro Quadratyard) bis etwa 2034,34 Gramm pro Quadratmeter (60 Unzen pro Quadratyard) aufweist und die Noppen eine Länge von etwa 12,7 mm (0.5 Zoll) bis etwa 101,6 mm (4 Zoll) aufweisen.

12. Verfahren gemäß Anspruch 8, wobei das Bilden der Stabilisierungsschicht (30) das Heißkleben benachbarter Fasern (14) als die kontaktierenden Eingriffe (32) beinhaltet.

## Revendications

1. Un revêtement de sol (10) à régulation stabilisée d'écoulement d'eau, comprenant :
un mat non-tissé (10) de fibres polymères (14) orientées de façon aléatoire définissant des espaces interstitiels (20), le mat ayant des axes étendus longitudinal et transversal respectifs et une épaisseur qui est inférieure à une minorité considérable de l'axe transversal,
les espaces interstitiels (20) définissant une pluralité de voies d'interférence pour l'écoulement d'eau non direct à travers celles-ci ;
une pluralité de touffes (24) espacées les unes des autres touffetées avec un fil polymère pour former un ou plusieurs brins synthétiques (22) dans chaque touffe s'étendant à partir de la surface supérieure (16) du mat (10) jusqu'à une étendue de brin pour simuler un champ d'herbe et connectées par des ponts de touffes (26) sur un côté opposé du mat ; et
une couche de stabilisation (30) sur un côté inférieur et une partie intérieure proche du mat non-tissé (10), ladite couche de stabilisation comprenant une pluralité d'engagements en contact (32) thermocollés de parties d'au moins certaines des fibres (14) et des ponts de touffes (26), le mat étant ainsi raidi,
le mat disposé sur une surface du sol modérant ainsi un débit d'écoulement d'eau environnementale dans la couche de stabilisation (30) et à travers le mat (10) pour une infiltration par permittivité accrue de l'eau environnementale à travers la surface du sol et s'opposant ainsi à l'écoulement latéral rapide de celle-ci à travers la surface du sol.

2. Le revêtement de sol à régulation stabilisée d'écoulement d'eau selon la revendication 1, dans lequel le denier des fibres (14) est dans une plage d'environ 100 deniers à environ 15 000 deniers et le mat (10) produit une taille apparente d'ouverture dans une plage de taille de tamis U.S. 3 à taille de tamis U.S. 30 (ASTM D4751).

3. Le revêtement de sol à régulation stabilisée d'écoulement d'eau selon la revendication 1, dans lequel le mat (10) a une épaisseur dans une plage d'environ 2,54 mm (0,1 pouce) à environ 101,6 mm (4,0 pouces) et dans lequel le mat (10) a une masse par unité de surface d'environ 101,72 grammes par mètre carré (3 onces par yard carré) à 2034,34 grammes par mètre carré (60 onces par yard carré).

4. Le revêtement de sol à régulation stabilisée d'écoulement d'eau selon la revendication 1, dans lequel les touffes (24) sont touffetées pour une masse volumique d'environ 169,53 grammes par mètre carré (5 onces par yard carré) à environ 2034,34 grammes par mètre carré (60 onces par yard carré) et lesdites touffes (24) ont une longueur d'environ 12,7 mm (0,5 pouce) à environ 101,6 mm (4 pouces).

5. Le revêtement de sol à régulation stabilisée d'écoulement d'eau selon la revendication 1, dans lequel les engagements en contact (32) comprennent des fibres adjacentes en contact thermocollées ensemble.

6. Le revêtement de sol à régulation stabilisée d'écoulement d'eau selon la revendication 1, dans lequel les engagements en contact (32) de la fibre (14) respective et du pont respectif parmi les ponts (26) sont thermocollés par calandrage du mat (10) entre des rouleaux de calandrage chauffés.

7. Le revêtement de sol à régulation stabilisée d'écoulement d'eau selon la revendication 1, comprenant en outre une pluralité d'agrafes (54) destinées à être insérées de manière espacée les unes des autres à travers le mat disposé sur une surface du sol.

8. Un procédé de diminution de l'écoulement d'eau à partir d'une surface du sol, comprenant les étapes de :
(a) formation d'un mat non-tissé (10) allongé de fibres polymères (14) orientées de façon aléatoire pour définir une pluralité d'espaces interstitiels (20) produisant une pluralité de voies d'interférence pour l'écoulement d'eau non direct à travers celles-ci ;
(b) touffetage d'une pluralité de touffes (24) espacées les unes des autres avec un fil polymère pour former un ou plusieurs brins synthétiques (22) dans chaque touffe s'étendant à partir de la surface supérieure (16) du mat (10) jusqu'à une étendue de brin pour simuler un champ d'herbe et connectées par des ponts de touffes (26) sur un côté opposé du mat ;
(c) définition d'une couche de stabilisation (30) sur un côté inférieur (18) et une partie intérieure proche du mat non-tissé (10) d'une pluralité d'engagements en contact (32) thermocollés de parties d'au moins certaines des fibres polymères (14) orientées de manière aléatoire et des ponts de touffes (26) ; et
(d) disposition du mat (10) sur une surface du sol (23),
le mat (10), disposé sur la surface du sol (23) et lors de l'exposition à un écoulement d'eau environnementale (25), modérant ainsi le débit d'écoulement d'eau dans la couche de stabilisation (30) et à travers le mat (10) pour une infiltration par permittivité accrue de l'eau à travers le mat à travers la surface du sol tout en résistant à l'écoulement latéral rapide de l'eau à travers la surface du sol.

9. Le procédé selon la revendication 8, dans lequel l'étape de formation du mat (10) utilise une fibre (14) ayant un denier dans une plage d'environ 100 deniers à environ 15 000 deniers et le mat (10) ayant une taille apparente d'ouverture dans une plage de taille de tamis U.S. 3 à taille de tamis U.S. 30 (ASTM D4751).

10. Le procédé selon la revendication 8, dans lequel le mat (10) se forme de manière à avoir une épaisseur dans une plage d'environ 2,54 mm (0,1 pouce) à environ 101,6 mm (4,0 pouces) avec une masse par unité de surface d'environ 101,72 grammes par mètre carré (3 onces par yard carré) à 2034,34 grammes par mètre carré (60 onces par yard carré).

11. Le procédé selon la revendication 8, dans lequel l'étape de touffetage touffète le fil pour avoir une masse volumique de touffes d'environ 169,53 grammes par mètre carré (5 onces par yard carré) à environ 2034,34 grammes par mètre carré (60 onces par yard carré) et lesdites touffes ayant une longueur d'environ 12,7 mm (0,5 pouce) à environ 101,6 mm (4 pouces).

12. Le procédé selon la revendication 8, dans lequel la formation de la couche de stabilisation (30) comprend le thermocollage de fibres adjacentes (14) comme engagements en contact (32).
